(19) Europäisches Patentamt
European Patent Office
Office européen des brevets

(11) **EP 2 868 042 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(51) Int Cl.:
*H04L 12/40* *(2006.01)*    *H04L 12/64* *(2006.01)*
*B60L 3/00* *(2006.01)*     *B60L 11/18* *(2006.01)*
*H01M 10/42* *(2006.01)*

(21) Anmeldenummer: **13730525.6**

(22) Anmeldetag: **17.06.2013**

(86) Internationale Anmeldenummer:
**PCT/EP2013/062504**

(87) Internationale Veröffentlichungsnummer:
**WO 2014/001118 (03.01.2014 Gazette 2014/01)**

(54) **VERFAHREN ZUR DATENÜBERTRAGUNG ZWISCHEN ELEKTRONISCHEN STEUERGERÄTEN, BATTERIE UND KRAFTFAHRZEUG MIT EINER SOLCHEN BATTERIE**

METHOD FOR DATA TRANSFER BETWEEN ELECTRONIC CONTROL DEVICES, BATTERY AND MOTOR VEHICLE WITH SUCH A BATTERY

PROCÉDÉ DE TRANSMISSION DE DONNÉES ENTRE DES UNITÉS DE COMMANDE ÉLECTRONIQUES, BATTERIE ET VÉHICULE À MOTEUR ÉQUIPÉ D'UNE TELLE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012 DE 102012211120**

(43) Veröffentlichungstag der Anmeldung:
**06.05.2015 Patentblatt 2015/19**

(73) Patentinhaber:
• **Robert Bosch GmbH**
  **70442 Stuttgart (DE)**
• **Samsung SDI Co., Ltd.**
  **Gyeonggi-do 446-557 (KR)**

(72) Erfinder:
• **BECKER, Jens**
  **70597 Stuttgart (DE)**
• **BROCHHAUS, Christoph**
  **52072 Aachen (DE)**

(74) Vertreter: **Bee, Joachim**
  **Robert Bosch GmbH**
  **C/IPE**
  **Wernerstrasse 1**
  **70469 Stuttgart (DE)**

(56) Entgegenhaltungen:
**WO-A2-02/21662    WO-A2-2010/058013**

**Beschreibung**

Die Erfindung betrifft ein Verfahren zur Datenübertragung zwischen elektronischen Steuergeräten, eine Batterie und ein Kraftfahrzeug mit einer solchen Batterie, welche insbesondere einsetzbar sind zur Verringerung der Kommunikationslast auf dem Kommunikationsbus zwischen einem Hauptsteuergerät und einem oder mehreren untergeordneten Steuergeräten, insbesondere zwischen Steuergeräten eines Batteriemanagementsystems.

Stand der Technik

Elektronische Steuergeräte werden im automobilen Umfeld in zunehmender Zahl eingesetzt (z. B. Motorsteuergeräte, Antiblockiersysteme, Airbag etc.). Für elektrisch angetriebene Fahrzeuge ist die Entwicklung von Batteriepacks mit einem zugehörigen Batteriemanagementsystem (BMS) notwendig. Ein BMS umfasst Steuergeräte mit Software zur Überwachung der Batteriefunktionalität. Abhängig von Kundenanforderungen oder vorhandenen Bauräumen sind die Topologien von Batteriepacks bezogen auf die Anzahl von Zellen, Modulen, Sensoren etc. sehr vielfältig.

Typische BMS gewährleisten die sichere und zuverlässige Funktion der Zellen und Packs. Sie überwachen und steuern Ströme, Spannungen, Temperaturen, Isolationswiderstand und andere Größen für die Zellen und den gesamten Batteriepack. Mit Hilfe dieser Größen lassen sich Managementfunktionen realisieren, welche die Lebensdauer, die Zuverlässigkeit und die Sicherheit des Batteriesystems steigern.

Ein BMS besteht aus einer Vielzahl von Steuergeräten, auf denen individuelle Softwarefunktionalitäten laufen. Abhängig von der Anzahl der Zellen, der Anzahl der Sensoren und der Verteilung der Batteriemodule auf verschiedene Bauräume im Fahrzeug ergibt sich eine Steuergerätetopologie mit einem Hauptsteuergerät und mehreren untergeordneten Sensorsteuergeräten für die Erfassung der Messdaten direkt an den einzelnen Batteriemodulen. Bei den Messdaten kann es sich z. B. um Spannungen, Temperaturen, Ströme etc. handeln. Die erfassten Daten werden zwischen den Steuergeräten über einen Kommunikationsbus, beispielsweise ein Controller Area Network (CAN), ausgetauscht.

Durch die Verwendung eines Kommunikationsbusses mit einer definierten Bandbreite ist das gesamte Datenaufkommen, das in einer bestimmten Zeit auf dem Bus transportiert werden kann, begrenzt. Eine geringe maximale Bandbreite verringert die Wahrscheinlichkeit von Störungen beispielsweise durch ungewollte elektrische oder elektromagnetische Effekte. Durch Verwendung einer hohen Anzahl von Batteriemodulen und zugehörigen Sensorsteuergeräten müssen alle Messdaten hochfrequent auf dem Bus zum Hauptsteuergerät kommuniziert werden. Die Messfrequenz wird somit durch die Bandbreite auf dem Bus und die Anzahl der Batteriemodule beschränkt.

Zur Lösung dieser Probleme schlägt WO 02/21662 A2 ein Batteriesystem mit einem Batterieknoten und mehreren verteilten Unterknoten erster und zweiter Klasse vor. Die Unterknoten erbeben Daten, welche sie an den Batterieknoten übermitteln können und werten diese aus.

Die WO 2010/058013 A2 beschreibt ein Verfahren zur Datenweiterleitung, bei dem eine Mehrzahl von Wechselrichtern zu einer Überwachungseinheit zusammengefasst ist. Die Wechselrichter sind in einem Netzwerk mit einer Vielzahl von zwischen geschalteten Datenverarbeitungseinheiten, wobei Daten von den Wechselrichtern an die Datenverarbeitungseinheiten übermittelt werden.

Offenbarung der Erfindung

Ein besonderer Vorteil der Erfindung besteht darin, dass gegenüber herkömmlichen Lösungen auf einem Kommunikationsbus zwischen elektronischen Steuergeräten Bandbreite für zusätzliche Kommunikation frei wird. Dies wird dadurch erreicht, dass zur Datenübertragung mindestens ein elektronisches Hauptsteuergerät und mindestens ein untergeordnetes elektronisches Steuergerät über einen Kommunikationsbus zur Datenübertragung miteinander kommunizieren. Vorzugsweise kommuniziert eine Vielzahl von unterordneten elektronischen Steuergeräten mit einem elektronischen Hauptsteuergerät. In einer bevorzugten Ausführungsform ist vorgesehen, dass das mindestens eine elektronische Hauptsteuergerät und das mindestens eine untergeordnete elektronische Steuergerät Komponenten eines BMS sind. Das mindestens eine untergeordnete elektronische Steuergerät umfasst mindestens einen Sensor, welcher vorgegebene Messgrößen, wie z. B. Strom, Spannung, Temperatur oder dergleichen, detektiert. Von dem (den) untergeordneten Steuergerät(en) wird (werden) die Messwerte erfasst und verarbeitet, wie beispielsweise digitalisiert. Erfindungsgemäß umfasst die Verarbeitung die Ermittlung von aus den erfassten Messwerten abgeleiteten Daten. Die abgeleiteten Daten werden, vorzugsweise anstelle der erfassten Messwerte, an das zumindest eine Hauptsteuergerät übertragen. In einer bevorzugten Ausführungsform ist vorgesehen, dass es sich bei den abgeleiteten Daten um einen Mittelwert handelt, der aus den erfassten Messwerten einer Messgröße gebildet wird. Vorzugsweise werden durch ein untergeordnetes Steuergerät Messwerte einer elektro-chemischen Zelle oder eines mehrere elektro-chemische Zellen umfassenden Moduls einer Batterie erfasst.

Erfindungsgemäß ist vorgesehen, dass für die elektro-chemische Zelle oder für das Modul die zu einer Messgröße erfassten Messwerte zu einer Gruppe zusammengefasst werden und für jede Gruppe ein Mittelwert gebildet wird.

In einer weiteren bevorzugten Ausführungsform ist vorgesehen, dass für zumindest einen Teil der Messwerte, vorzugsweise für jeden Messwert, einer Gruppe die Abweichung des Messwertes vom Mittelwert gebildet und an das Hauptsteuergerät übertragen wird.

Als vorteilhaft erweist es sich, wenn die Mittelwerte zusammen mit den Abweichungen an das Hauptsteuergerät übertragen werden. Mit Hilfe des Mittelwerts und den zugehörigen Abweichungen werden durch das Hauptsteuergerät aus den abgeleiteten Daten die erfassten Messwerte rekonstruiert. Da die abgeleiteten Daten ein geringeres Volumen als die vollständigen, erfassten Messwerte haben, wird durch die Übertragung der abgeleiteten Daten Bandbreite auf dem Kommunikationsbus frei, welche für zusätzliche Kommunikation genutzt werden kann. Da bei Einsatz des erfindungsgemäßen Verfahrens die Messwerte ohne Genauigkeitsverlust rekonstruiert werden können, wird durch die Erfindung eine verlustfreie Kompression für die Datenübertragung zwischen elektronischen Steuergeräten bereitgestellt.

Die von den abgeleiteten Daten belegte Bandbreite kann gemäß einer bevorzugten Ausführungsform gesteuert werden, indem für die abgeleiteten Daten eine Auflösung vorgegeben wird. Vorzugsweise wird die Auflösung in Abhängigkeit der Größe der Abweichung und/oder in Abhängigkeit der Größe der zeitlichen Änderung der Messgröße vorgegeben. Insbesondere kann eine geringe Auflösung vorgegeben werden, wenn die einzelnen Messwerte einer Gruppe nur wenig voneinander abweichen, wie das beispielsweise für die Zellspannungen der Fall ist. Auch wenn sich die Messwerte nur langsam ändern, wie z. B. die Zelltemperatur, kann eine geringe Auflösung vorgegeben werden. In einer bevorzugten Ausführungsform ist vorgesehen, dass die Auflösung dynamisch in Abhängigkeit der Größe der Abweichung und/oder in Abhängigkeit der Größe der zeitlichen Änderung der Messgröße vorgegeben.

Eine weitere bevorzugte Ausführungsform sieht vor, dass die durch die Kompression freiwerdende Bandbreite auf dem Kommunikationsbus für die Übertragung weiterer Daten genutzt wird. Bei diesen Daten kann es sich beispielsweise um Signale handeln, welche von dem Hauptsteuergerät an zumindest eins der untergeordneten Steuergeräte gesendet werden, wie beispielsweise um Dienstanforderungen oder Steuersignale, oder um redundant übertragene Messdaten und/oder abgeleitete Daten handeln.

Ein weiterer Aspekt der Erfindung betrifft eine Batterie, die mit zumindest einem Hauptsteuergerät und mindestens einem untergeordneten Steuergerät kombiniert ist, wobei das zumindest eine Hauptsteuergerät und das mindestens eine untergeordnete Steuergerät derart eingerichtet sind, dass ein Verfahren zur Datenübertragung ausführbar ist, wobei von dem mindestens einen untergeordneten Steuergerät Messwerte erfasst werden, durch das mindestens eine untergeordnete Steuergerät von zumindest einem Teil der erfassten Messwerte abgeleitete Daten gebildet und die abgeleiteten Daten an zumindest ein Hauptsteuergerät übertragen werden. Vorzugsweise handelt es sich bei der Batterie um eine Lithium-Ionen-Batterie oder die Batterie umfasst elektrochemische Zellen, die als Lithium-Ionen-Batteriezellen ausgebildet sind.

Ein anderer Aspekt der Erfindung betrifft ein Kraftfahrzeug mit einem elektrischen Antriebsmotor zum Antreiben des Kraftfahrzeugs und einer mit dem elektrischen Antriebsmotor verbundenen oder verbindbaren Batterie gemäß dem im voranstehenden Absatz beschriebenen Erfindungsaspekt. Die Batterie ist jedoch nicht auf einen solchen Einsatzzweck eingeschränkt, sondern kann auch in anderen elektrischen Systemen eingesetzt werden.

Durch Ausnutzen von bestimmten Charakteristika der Messdaten können die Messdaten geeignet verlustfrei komprimiert werden. Beispiele solcher Charakteristika sind im Folgenden exemplarisch angeführt:

- Zellspannungen: Idealerweise werden Zellen auf möglichst gleichem Spannungsniveau gehalten. Dies geschieht durch Zellspannungsausgleich, sog. Zell-Balancing. Somit sind die gemessenen Unterschiede der Zellspannungen untereinander gering.

- Temperaturen: Zelltemperaturen ändern sich nur langsam, und in den Batteriemodulen kann davon ausgegangen werden, dass an verschiedenen Stellen sehr ähnliche Temperaturen gemessen werden.

Unter diesen Voraussetzungen können Parameter der Batterie bzw. Batteriemodule, wie z. B. die Zellspannungen und Temperaturen, die zu einem Modul und somit einem Sensorsteuergerät gehören, komprimiert werden. Als besonders vorteilhaft erweist es sich, wenn der Mittelwert der Zellspannungen des Moduls ermittelt wird. Zusätzlich zu dem Mittelwert der Zellspannungen werden pro Zelle die einzelnen Abweichungen der gemessenen Zellspannung zum Mittelwert übertragen. Dadurch wird die Gesamtmenge der zu übertragenden Daten reduziert, da die Differenzen der einzelnen Spannung vom Mittelwert wegen der oben erwähnten Charakteristika sehr gering sind. Analog kann das Verfahren für Temperaturen und andere Messgrößen oder Parameter angewandt werden. Ein besonderer Vorteil des Verfahrens besteht darin, dass die Messgenauigkeit erhalten bleibt. Es werden keine Messwerte gerundet oder auf andere Art und Weise mit Verlusten bei der Kommunikation zum Hauptsteuergerät behaftet.

Die Erfindung hat folgende Vorteile:

- Bei der Kommunikation von Messdaten von Sensorsteuergeräten zum Hauptsteuergerät werden die Messdaten ohne Genauigkeitsverlust komprimiert.

- Durch die Übertragung des Mittelwerts zusammen mit den Abweichungen der einzelnen Messwerte vom Mittelwert kann in jedem Messzyklus jederzeit der vollständige Datensatz rekonstruiert werden.

- Durch Ausnutzen von spezifischen Charakteristika von Messgrößen, d. h. von speziellen Eigenschaften der Messgrößen, wie z. B. geringe Abweichungen der einzelnen Messwerte vom Mittelwert, kann eine entsprechende verlustfreie Kompression realisiert werden.

- Da durch die Erfindung das Volumen der zwischen einem oder mehreren Sensorsteuergeräten und dem Hauptsteuergerät übertragenen Daten reduziert wird, wird der Datenbus zu einem geringeren Anteil ausgenutzt und ist somit weniger störanfällig.

- Durch die geringere Ausnutzung des Datenbusses kann eine zusätzliche Kommunikation auf dem Bus hinzugefügt werden, z. B. Dienstanforderungen vom Hauptsteuergerät an die Sensorsteuergeräte.

- Darüber hinaus können durch die geringere Buslast zusätzliche Sensorsteuergeräte auf dem Bus kommunizieren, sodass die Gesamtzahl der Sensorsteuergeräte bei gleichbleibender Bandbreite erhöht werden kann.

Die freigewordene Buskapazität kann zur redundanten Übertragung von Messdaten genutzt werden, um die Störungsanfälligkeit zu verringern.

Vorteilhafte Weiterbildungen der Erfindung sind in den Unteransprüchen angegeben und in der Beschreibung beschrieben.

Zeichnungen

Ausführungsbeispiele der Erfindung werden anhand der Zeichnungen und der nachfolgenden Beschreibung näher erläutert. Es zeigen:

Figur 1 eine Prinzipdarstellung der Anordnung von Steuergeräten in einem BMS und,

Figur 2 die Veranschaulichung einer beispielhaften Übertragung von abgeleiteten Daten und der Rekonstruktion von vollständigen Messwerten aus den abgeleiteten Daten.

Ausführungsformen der Erfindung

Nachfolgend soll die Erfindung am Beispiel von elektronischen Steuergeräten eines BMS näher erläutert werden. Dabei ist zu beachten, dass die Erfindung sich nicht auf die Datenübertragung zwischen den elektronischen Steuergeräten eines BMS beschränkt, sondern alle Ausführungsformen umfasst, welche nur die Merkmale der unabhängigen Ansprüche realisieren.

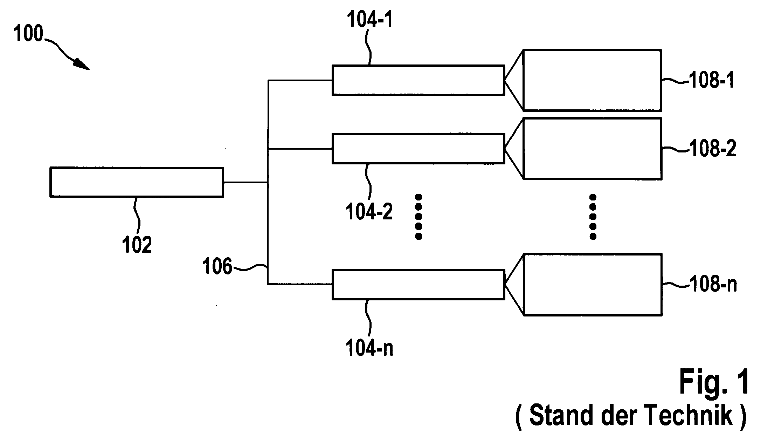

Figur 1 zeigt den prinzipiellen Aufbau eines BMS 100. Das beispielhafte BMS 100 umfasst ein Hauptsteuergerät 102 und mehrere untergeordnete Sensorsteuergeräte 104-1, 104-2, ... , 104-n. Die untergeordneten Sensorsteuergeräte 104-1, 104-2, ... , 104-n sind über einen Kommunikationsbus 106 mit dem Hauptsteuergerät 102 verbunden. Die untergeordneten Sensorsteuergeräte 104-1, 104-2, ... , 104-n umfassen Sensoren (nicht dargestellt), welche Messgrößen von Batteriemodulen 108-1, 108-2, ... , 108-n zur Zustandsüberwachung der Batterie detektieren.

In der beispielhaften Ausführungsform werden die Messwerte zu einem Datensatz konvertiert, welcher zumindest den Mittelwert der Messwerte und n Abweichungen vom Mittelwert umfasst. Dabei steht n für die Anzahl der Messdaten bzw. Messwerte je Messdatengruppe; die Abweichung ist vorzugsweise die Differenz zwischen Messwert und Mittelwert. In der beispielhaften Ausführungsform wird für Gruppen von Messdaten jeweils ein Datensatz erstellt. So wird z. B. aus allen Zellspannungen 202-1, 202-2, 202-3, 202-4 der Mittelwert 204 berechnet und der Mittelwert 204 zusammen mit den Abweichungen 206 der einzelnen Zellspannungen auf dem Kommunikationsbus 106 übermittelt. Gleiches wird mit den Temperaturen 208-1, 208-2, für die ein eigener Mittelwert 210 berechnet wird, und mit anderen Messwerten mit jeweils eigenen Mittelwerten durchgeführt. Die Sensorsteuergeräte 104-1, 104-2, ... , 104-n übermitteln die Messdatengruppen an das Hauptsteuergerät 102. Auf dem Hauptsteuergerät 102 werden aus dem Mittelwert 204, 210 und den einzelnen Abweichungen 206, 212 die tatsächlichen Messwerte verlustfrei rekonstruiert.

Bei der ersten Messung wird somit für die Zellspannung und die Temperatur jeweils ein erster Datensatz 214, 216 erhalten, die jeweils die Messwerte der ersten Messung und die Mittelwerte 204, 210 für jede der bei der ersten Messung berücksichtigten Gruppe von Messdaten umfassen. Daraus werden die Datensätze der Abweichungen 206, 212 ermittelt. In den darauf folgenden Messungen erhält man entsprechend Datensätze 218, 220, 222, 224, 226, 228 mit den jeweiligen Messwerten und Mittelwerten, aus denen für jede Messung wiederum die Abweichungen 230, 232, 234, 236, 238, 240 ermittelt werden.

Die Kompression ist eine Folge der Übertragung der Abweichungen 206, 212, 230, 232, 234, 236, 238, 240. Da der Wertebereich für die Abweichungen 206, 212, 230, 232, 234, 236, 238, 240 wesentlich geringer ist als der Wertebereich der vollständigen Messwerte, nimmt die Übertragung der Mittelwerte 204, 210 und der Abweichungen 206, 212, 230, 232, 234, 236, 238, 240 weniger Platz auf dem Kommunikationsbus 106 in Anspruch.

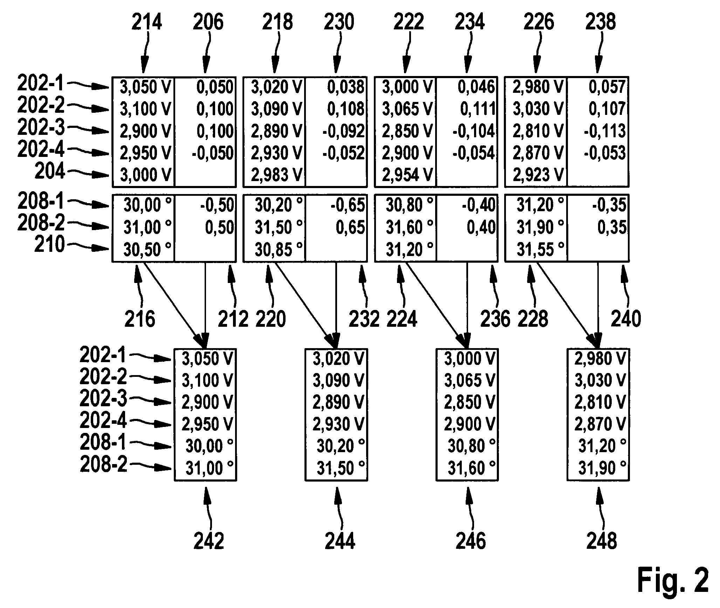

Anhand von Figur 2 soll die Generierung und Übertragung der komprimierten Daten sowie die Rekonstruktion der vollständigen Messdaten aus den je Gruppe übertragenen Mittelwert 204, 210 und Abweichungen 206, 212, 230, 232, 234, 236, 238, 240 veranschaulicht werden. Ein Sensorsteuergerät 104-1, 104-2, ... , 104-n erfasst für jede der Gruppen "Zellspannung" und Temperatur" die entsprechenden Messwerte, berechnet den jeweiligen Mittelwert 204, 210 und generiert entsprechende Datensätze 214, 216. Daraus werden durch das Sensorsteuergerät 104-1, 104-2, ... , 104-n die Abweichungen 206, 212 berechnet.

Eine mögliche Berechung der Abweichungen 206, 212 ist die folgende:

$$Abweichung = Messwert - Mittelwert$$

An das Hauptsteuergerät 102 werden dann nur die Mittelwerte 204, 210 und die Abweichungen 206, 212 übertragen. Im vorliegenden speziellen Beispiel werden somit folgende Daten auf den Kommunikationsbus 106 gegeben:

Gruppe 1: Zellspannungen: {Mittelwert: 3,000 V, Abweichungen: 0,5 V; 0,1 V; - 0,1 V; -0,05 V} und

Gruppe 2: Temperatur: { Mittelwert: 30,50°C, Abweichungen: -0,5°C; 0,5°C}

Dadurch, dass nicht alle vier vollständigen Zellspannungen und zwei Temperaturen übertragen werden, sondern nur je ein Mittelwert 204, 210 mit vier Spannungsabweichungen 206 und zwei Temperaturabweichungen 212, wird das gesamte Datenaufkommen auf dem Kommunikationsbus 106 stark reduziert, weil die Spannungsabweichungen beispielsweise in einem Bereich von +/-0,1 V und die Temperaturabweichungen in einem Bereich von +/-1°C liegen und hier Werte aus dem reduzierten Wertebereich übermittelt werden müssen, anstatt der vollständigen Werte, die beispielsweise bei den Spannungen im Bereich von 2,0 V bis 4,5 V und bei den Temperaturen im Bereich von -20°C bis 120°C liegen können. Die Definition der Auflösung der Wertebereiche für die Abweichungen wird in Abhängigkeit von Zell- und Batteriepackeigenschaften vorgenommen.

Auf dem Hauptsteuergerät 102 werden die vollständigen Messwerte aus den übertragenen, komprimierten Daten rekonstruiert. So ergeben sich beispielsweise die rekonstruierten Messwerte 242 der erstem Messung aus den übertragenen Mittelwerten 204, 210 und den Abweichungen 206, 212, indem die Abweichungen 206, 212 wieder dem Mittelwert 204, 210 hinzuaddiert werden:

$$Messwert = Mittelwert + Abweichung.$$

Entsprechend ergeben sich die rekonstruierten Messwerte 244, 246, 248 der nachfolgenden Messungen.

Die Erfindung beschränkt sich in ihrer Ausführungsform nicht auf die vorstehend angegebenen bevorzugten Ausführungsbeispiele. Vielmehr ist eine Anzahl von Varianten denkbar, die von dem erfindungsgemäßen Verfahren, der erfindungsgemäßen Vorrichtung, der erfindungsgemäßen Batterie und dem erfindungsgemäßen Kraftfahrzeug auch bei grundsätzlich anders gearteten Ausführungen Gebrauch macht.

**Patentansprüche**

1. Verfahren zur Datenübertragung zwischen elektronischen Steuergeräten (100), wobei die Steuergeräte (100) zumindest ein Hauptsteuergerät (102) und mindestens ein untergeordnetes Steuergerät (104-1, 104-2, ... , 104-n) umfassen, und von dem mindestens einen untergeordneten Steuergerät (104-1, 104-2, ... , 104-n) Messwerte (214, 218, 222, 226, 216, 220, 224, 228) erfasst werden, wobei durch das mindestens eine untergeordnete Steuergerät von zumindest einem Teil der erfassten Messwerte (214, 218, 222, 226, 216, 220, 224, 228) abgeleitete Daten gebildet und die abgeleiteten Daten an zumindest ein Hauptsteuergerät übertragen werden, **dadurch gekennzeichnet, dass** es sich bei den abgeleiteten Daten um einen Mittelwert (204, 210) von zu einer Messgröße erfassten Messwerten (214, 218, 222, 226, 216, 220, 224, 228) handelt.

2. Verfahren nach Anspruch 1, wobei die abgeleiteten Daten die Abweichungen (206, 212, 230, 234, 236, 238, 240) der Messwerte (214, 218, 222, 226, 216, 220, 224, 228) von dem Mittelwert (204, 210) umfassen.

3. Verfahren nach einem der voranstehenden Ansprüche, wobei eine Auflösung für die abgeleiteten Daten vorgegeben wird.

4. Verfahren nach Anspruch 3, wobei die Auflösung in Abhängigkeit der Messgröße, deren Messwerte (214, 218, 222, 226, 216, 220, 224, 228) erfasst werden, vorgegeben wird.

5. Verfahren nach Anspruch 4, wobei die Auflösung in Abhängigkeit der Größe der Abweichung und/oder in Abhängigkeit der Größe der zeitlichen Änderung der Messgröße vorgegeben wird.

6. Verfahren nach einem der voranstehenden Ansprüche, wobei die Messwerte (214, 218, 222, 226, 216, 220, 224, 228) von einer oder mehreren elektro-chemischen Zellen eines elektrischen Energiespeichers erfasst werden.

7. Verfahren nach einem der voranstehenden Ansprüche, wobei über die infolge der vorgegebenen Auflösung freigewordene Bandbreite eine redundante Übertragung von Messdaten und/oder abgeleiteten Daten erfolgt.

8. Batterie, die mit zumindest einem Hauptsteuergerät (102) und mindestens einem untergeordneten Steuergerät (104-1, 104-2, ... , 104-n) kombiniert ist, wobei das zumindest eine Hauptsteuergerät (102) und das mindestens eine untergeordnete Steuergerät derart (104-1, 104-2, ... , 104-n) eingerichtet sind, dass ein Verfahren gemäß einem der Ansprüche 1 bis 7 ausführbar ist.

9. Batterie nach Anspruch 8, verbunden oder verbindbar mit einem elektrischen Antriebsmotor eines Kraftfahrzeugs.

## Claims

1. Method for transmitting data between electronic control devices (100), the control devices (100) comprising at least one main control device (102) and at least one subordinate control device (104-1, 104-2, ..., 104-n), and measured values (214, 218, 222, 226, 216, 220, 224, 228) being recorded by the at least one subordinate control device (104-1, 104-2, ..., 104-n),
data derived from at least some of the recorded measured values (214, 218, 222, 226, 216, 220, 224, 228) being formed by the at least one subordinate control device and the derived data being transmitted to at least one main control device, **characterized in that** the derived data are a mean value (204, 210) of measured values (214, 218, 222, 226, 216, 220, 224, 228) recorded for a measurement variable.

2. Method according to Claim 1, the derived data comprising the deviations (206, 212, 230, 234, 236, 238, 240) of the measured values (214, 218, 222, 226, 216, 220, 224, 228) from the mean value (204, 210).

3. Method according to one of the preceding claims, a resolution being predefined for the derived data.

4. Method according to Claim 3, the resolution being predefined on the basis of the measurement variable, the measured values (214, 218, 222, 226, 216, 220, 224, 228) of which are recorded.

5. Method according to Claim 4, the resolution being predefined on the basis of the magnitude of the deviation and/or on the basis of the magnitude of the temporal change in the measurement variable.

6. Method according to one of the preceding claims, the measured values (214, 218, 222, 226, 216, 220, 224, 228) being recorded by one or more electrochemical cells of an electrical energy store.

7. Method according to one of the preceding claims, measurement data and/or derived data being redundantly transmitted via the bandwidth released as a result of the predefined resolution.

8. Battery which is combined with at least one main control device (102) and at least one subordinate control device (104-1, 104-2, ..., 104-n), the at least one main control device (102) and the at least one subordinate control device (104-1, 104-2, ..., 104-n) being set up in such a manner that a method according to one of Claims 1 to 7 can be carried out.

9. Battery according to Claim 8, which is connected or can be connected to an electric drive motor of a motor vehicle.

## Revendications

1. Procédé de transmission de données entre des contrôleurs électroniques (100), les contrôleurs (100) comprenant au moins un contrôleur principal (102) et au moins un contrôleur subordonné (104-1, 104-2, ..., 104-n), et des valeurs mesurées (214, 218, 222, 226, 216, 220, 224, 228) étant acquises par l'au moins un contrôleur subordonné (104-1, 104-2, ..., 104-n) des données dérivées étant formées par l'au moins un contrôleur subordonné d'au moins une partie des valeurs mesurées (214, 218, 222, 226, 216, 220, 224, 228) acquises et les données dérivées étant transmises à au moins un contrôleur principal, **caractérisé en ce que** les données dérivées sont une valeur moyenne (204, 210) des valeurs mesurées (214, 218, 222, 226, 216, 220, 224, 228) acquises à propos d'une grandeur mesurée.

2. Procédé selon la revendication 1, les données dérivées comprenant les écarts (206, 212, 230, 234, 236, 238, 240) entre les valeurs mesurées (214, 218, 222, 226, 216, 220, 224, 228) et la valeur moyenne (204, 210).

3. Procédé selon l'une des revendications précédentes, une résolution étant prédéfinie pour les données dérivées.

4. Procédé selon la revendication 3, la résolution étant prédéfinie en fonction de la grandeur mesurée dont les valeurs mesurées (214, 218, 222, 226, 216, 220, 224, 228) sont acquises.

5. Procédé selon la revendication 4, la résolution étant prédéfinie en fonction de l'amplitude de l'écart et/ou en fonction de l'amplitude de la variation dans le temps de la grandeur mesurée.

6. Procédé selon l'une des revendications précédentes, les valeurs mesurées (214, 218, 222, 226, 216, 220, 224, 228) d'une ou plusieurs cellules électrochimiques d'un accumulateur d'énergie électrique étant acquises.

7. Procédé selon l'une des revendications précédentes, une transmission redondante des données de mesure et/ou des données dérivées étant effectuée sur la largeur de bande qui s'est libérée du fait de la résolution prédéfinie.

8. Batterie, laquelle est combinée avec au moins un contrôleur principal (102) et au moins un contrôleur subordonné (104-1, 104-2, ..., 104-n), l'au moins un contrôleur principal (102) et l'au moins un contrôleur subordonné (104-1, 104-2, ..., 104-n) étant configurés de telle sorte qu'un procédé selon l'une des revendications 1 à 7 peut être mis en oeuvre.

9. Batterie selon la revendication 8, reliée ou pouvant être reliée à un moteur de propulsion électrique d'un véhicule automobile.

**Fig. 1**
( Stand der Technik )

EP 2 868 042 B1

|  | 214 | 206 | 218 | 230 | 222 | 234 | 226 | 238 |
|---|---|---|---|---|---|---|---|---|
| 202-1 | 3,050 V | 0,050 | 3,020 V | 0,038 | 3,000 V | 0,046 | 2,980 V | 0,057 |
| 202-2 | 3,100 V | 0,100 | 3,090 V | 0,108 | 3,065 V | 0,111 | 3,030 V | 0,107 |
| 202-3 | 2,900 V | 0,100 | 2,890 V | -0,092 | 2,850 V | -0,104 | 2,810 V | -0,113 |
| 202-4 | 2,950 V | -0,050 | 2,930 V | -0,052 | 2,900 V | -0,054 | 2,870 V | -0,053 |
| 204 | 3,000 V |  | 2,983 V |  | 2,954 V |  | 2,923 V |  |

| | | | | | | | | |
|---|---|---|---|---|---|---|---|---|
| 208-1 | 30,00 ° | -0,50 | 30,20 ° | -0,65 | 30,80 ° | -0,40 | 31,20 ° | -0,35 |
| 208-2 | 31,00 ° | 0,50 | 31,50 ° | 0,65 | 31,60 ° | 0,40 | 31,90 ° | 0,35 |
| 210 | 30,50 ° |  | 30,85 ° |  | 31,20 ° |  | 31,55 ° |  |

216  212  220  232  224  236  228  240

|  | 242 | 244 | 246 | 248 |
|---|---|---|---|---|
| 202-1 | 3,050 V | 3,020 V | 3,000 V | 2,980 V |
| 202-2 | 3,100 V | 3,090 V | 3,065 V | 3,030 V |
| 202-3 | 2,900 V | 2,890 V | 2,850 V | 2,810 V |
| 202-4 | 2,950 V | 2,930 V | 2,900 V | 2,870 V |
| 208-1 | 30,00 ° | 30,20 ° | 30,80 ° | 31,20 ° |
| 208-2 | 31,00 ° | 31,50 ° | 31,60 ° | 31,90 ° |

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0221662 A2
- WO 2010058013 A2